# EUROPÄISCHE PATENTSCHRIFT

(11) **EP 3 015 761 B1**
(45) Veröffentlichungstag und Bekanntmachung des Hinweises auf die Patenterteilung: **24.04.2019**
(21) Anmeldenummer: 15192288.7
(22) Anmeldetag: 30.10.2015
(51) Int. Cl.: F21V 5/00, F21K 9/61, F21V 8/00, F21S 8/04, F21Y 103/10, F21Y 105/10, F21Y 115/10

(54) **LEUCHTENBAUGRUPPE MIT OPTISCHEM ELEMENT**
LIGHTING MODULE WITH OPTICAL ELEMENT
DISPOSITIF D'ÉCLAIRAGE AVEC ÉLÉMENT OPTIQUE

(30) Priorität: 30.10.2014 DE 102014115825
(43) Veröffentlichungstag der Anmeldung: 04.05.2016
(73) Patentinhaber: ITZ Innovations- und Technologiezentrum GmbH, 59759 Arnsberg (DE)
(72) Erfinder: Lewers, Christoph, 59757 Arnsberg (DE); Seltmann, Dipl. Ing. Stefan, 59821 Arnsberg (DE)
(74) Vertreter: Lippert Stachow Patentanwälte Rechtsanwälte

(56) Entgegenhaltungen:
- EP-A2- 2 796 769
- DE-A1-102010 027 648
- US-A1- 2013 051 066

## Beschreibung

Die Erfindung betrifft eine Leuchtenbaugruppe nach dem Oberbegriff nach Anspruch 1.

Mit der Einführung von LEDs in Beleuchtungsvorrichtungen sowohl im gewerblichen als auch im privaten Bereich sind optische Systeme gestaltbar, welche aufgrund der Punktförmigkeit des Leuchtmittels eine vergleichsweise geringe, blendfreie Lichtaustrittsfläche aufweisen, beispielsweise bereitgestellt unter Verwendung von Linsen, Mikroraster oder Reflektoren. Derartige Systeme weisen eine vergleichsweise kompakte Bauform auf und erlauben eine exakte Lenkung bzw. Führung des Lichtes zur Erzeugung einer spezifischen Lichtverteilung oder normativen Entblendung. Typisch für derartige optische Systeme ist es jedoch, dass außerhalb der in der Norm beschriebenen Bereiche einer Blendungsbegrenzung, unter Umständen aufgrund der hohen Güte der optischen Systeme, hohe Kontraste und Leuchtdichten entstehen, welche vom Betrachter als extrem störend empfunden werden können.

Zur Vermeidung dieses Problems wurden optische Systeme für LED-Leuchten vorgeschlagen, bei welchen um die eigentliche Lichtaustrittsfläche der Optik herum eine leuchtende Fläche vorgesehen ist, deren Leuchtdichte den Kontrast mildert. Diese Umgebungsleuchtdichte wird bei den bekannten Leuchten durch eine Hinterleuchtung erzeugt, welche den Herstellungsaufwand und damit die Kosten der Leuchte erhöht.

Die Offenlegungsschrift US 2013/0051066 A1 betrifft eine Beleuchtungseinrichtung, umfassend Lichtquellen, eine Lichtführungsplatte zum Führen von Licht der Lichtquellen sowie ein Gehäuse zu Halten der Lichtquellen und der Lichtleitplatte, wobei die Beleuchtungseinrichtung mittig ein Befestigungsteil aufweist. Die Lichtleitplatte und die Lichtquellenanordnung sind derart gestaltet und zueinander angeordnet, dass sich eine gleichförmige Lichtabgabe über die gesamte Erstreckung der Beleuchtungseinrichtung einstellt.

Die Offenlegungsschrift DE 10 2010 027 648 A1 betrifft eine Signalleuchteneinheit für einen Fahrzeugaußenspiegel, die eingerichtet ist, eine Lichtabstrahlung in Fahrtrichtung und entgegen der Fahrtrichtung bereitzustellen. Hierzu weist die Signalleuchteneinheit eine Anzahl von länglichen Lichtleitkörpern und eine Anzahl von zugeordneten Leuchtmitteln zum Beleuchten eines Einkoppelabschnittes des zugeordneten Lichtleitkörpers auf. In einer Ausführungsvariante umfasst die Signalleuchteneinheit zwei Leuchtenmittel sowie zwei länglich ausgeführte Lichtleitkörper, wobei den Leuchtmitteln jeweils ein Lichtleitkörper zugeordnet ist. Die Offenlegungsschrift EP 2 796 769 A2 betrifft eine LED-Leuchte mit einer plattenartigen Lichtleiter-Anordnung mit einer Öffnung, wobei die LED-Lichtquelle so angeordnet ist, dass ein erster Teil des Lichtes über die Öffnung abgegeben wird und ein zweiter Teil des Lichtes über einen Umfangsrand der Öffnung in die Lichtleiter-Anordnung eingekoppelt wird und im weiteren über eine Flachseite der Lichtleiteranordnung abgegeben wird.

Der Erfindung liegt die Aufgabe zugrunde, eine Leuchtenbaugruppe für eine Leuchte bereitzustellen, welche herkömmlicher Leuchten bzw. Leuchtenbaugruppen mit punktförmigen Lichtquellen in Bezug auf den beschriebenen Nachteil verbessert. Diese Aufgabe löst die Erfindung mit einer Leuchtenbaugruppe mit den Merkmalen von Anspruch 1. Dabei zeichnet sich die erfindungsgemäße Leuchtenbaugruppe dadurch aus, dass Lichtquellen der primären Lichtquellen-Struktur und Lichtquellen der sekundären Lichtquellen-Struktur ein unterschiedliches Emissionsspektrum und/oder getrennt ansteuerbare Stromversorgungen aufweisen.

Zweckmäßigerweise kann auch der Auskoppelbereich zum Leiten bzw. Führen des Lichtes insbesondere in lateraler Richtung ausgebildet sein, sodass die Auskopplung von Licht über den lateral ausgedehnten Auskoppelbereich erfolgen kann.

Durch die angegebene Gestaltung der erfindungsgemäßen Leuchtenbaugruppe bzw. des erfindungsgemäß gestalteten optischen Elementes wird eine kompakte und kostengünstige Bauform der gesamten Baugruppe bereitgestellt, bei welcher zumindest in einer Vielzahl von Ausführungsformen das für den eigentlichen Beleuchtungslichtstrom verantwortliche Leuchtmittel in exakt vorgebbarer Weise durch die Verwendung von insbesondere lateralen Lichtleit- und Lichtlenkabschnitten auch den Lichtteil zur kontrastvermindernden Aufhellung in Querrichtung zum gerichteten Beleuchtungslichtstrom bereitstellt. Dabei kann Licht insbesondere im Zentralabschnitt und/oder in dessen Randbereich aufgenommen und in zum Zentralabschnitt lateral beabstandete Bereiche geführt und dort ausgekoppelt werden. Darüber hinaus ist es mit der erfindungsgemäßen Leuchtenbaugruppe nun möglich, auf konstruktiv einfache und kostengünstige Weise mehrere Leuchtenareale bei einer Leuchte bereitzustellen, welche speziell auf die physiologischen Bedürfnisse des Menschen einstellbar sind. Bei solchen Ausführungsformen, bei welchen der Lichtstrom, der zur Kontrastverminderung verwendet wird, von der gleichen Lichtquelle wie der Lichtstrom für den eigentliche Beleuchtungslichtstrom stammt, verteilt sich der gesamte Lichtstrom auf beide Bereiche. Auf diese Weise reduziert sich der Lichtstrom aus dem Zentralabschnitt was insbesondere bei der Verwendung von hocheffizienten Energiequellen wie LEDs vorteilhaft sein kann.

Die erfindungsgemäße Baugruppe kann mit allen bekannten punktförmigen Lichtquellen wie Licht emittierenden Halbleitereinrichtungen, insbesondere Halbleiterdioden wie LEDs oder Laserdioden realisiert sein, wobei der Halbleiter ein organischer oder nichtorganischer Halbleiter sein kann. Der Einfachheit halber wird im Folgenden die Angabe "LED" verwendet; diese Angabe ist in der vorliegenden Anmeldung als beispielhaft anzusehen und kann jede punktförmige Lichtquelle meinen, insbesondere auch eine Laserdiode.

Dabei weist die Lichtquellenanordnung-Anordnung der erfindungsgemäßen Baugruppe eine primäre LED-Struktur und eine sekundäre LED-Struktur auf, wobei LEDs der primären LED-Struktur und LEDs der sekundären LED-Struktur eine unterschiedliche Lichtfarbe bzw. spektrales Emissionsverhalten und/oder getrennt ansteuerbare Stromversorgung aufweisen. Es kann vorgesehen sein, dass alle LEDs der primären LED-Struktur gleichartige LEDs aufweisen, insbesondere in Bezug auf ihre elektrischen und/oder Lichtemissionseigenschaften. In ähnlicher Weise kann vorgesehen sein, dass die LEDs der sekundären LED-Struktur gleichartige LEDs umfassen. Zweckmäßigerweise können sowohl die primäre als auch die sekundäre LED-Struktur auf einem einzelnen LED-Träger wie einer Leiterplatte angeordnet sein, wobei sie sich auch in Bezug auf ihre örtliche Anordnung zueinander unterscheiden können.

Die Bereitstellung von unterschiedlichen Leuchtmitteln kann insbesondere genutzt werden, um zum eigentlichen Beleuchtungslichtstrom zusätzliche Leuchtdichtenareale mittels Lichtauskoppelflächen im Bereich der Lateralabschnitte des optischen Elements bereitzustellen, welche sich von dem Beleuchtungsareal in Bezug auf die Stärke des Lichtstromes und/oder in Bezug auf die Wellenlänge des abgegebenen Lichtes unterscheiden. Dabei können diese Lichtdichteareale nicht nur zur Kontrastverminderung beitragen, sondern auch eine an den Tagesrhythmus angepasste und damit an die Physiologie des Menschen angepasste Beleuchtung bereitstellen.

Weitere vorteilhafte Merkmale sind in der nachfolgenden allgemeinen sowie der speziellen Beschreibung und den Unteransprüchen angegeben.

Die Grundform der erfindungsgemäßen Leuchtenbaugruppe bzw. des diesbezüglichen optischen Elementes kann flexibel an die jeweilige Beleuchtungsaufgabe angepasst sein, beispielsweise mit einer kreisförmigen Grundfläche oder einer langgestreckten, insbesondere rechteckförmigen Grundfläche.

Zweckmäßigerweise kann die erfindungsgemäße Leuchtenbaugruppe langgestreckt ausgebildet sein, wobei die LED-Anordnung zumindest eine mittlere Reihenanordnung von LEDs der primären LED-Struktur aufweisen kann. Dabei kann beidseitig zur Längserstreckung jeweils zumindest eine zur mittleren Reihenanordnung der primären LED-Struktur lateral beabstandete Reihenanordnungen von LEDs der sekundären LED-Struktur angeordnet sein. Es ist darauf hinzuweisen, dass sowohl die mittlere Reihenanordnung von LEDs der primären LED-Struktur als auch die jeweilige hierzu lateral beabstandete Reihenanordnung von LEDs der sekundären LED-Struktur selbst mehrere, insbesondere parallel verlaufende Reihen von LEDs aufweisen können. In der einfachsten Ausführungsform weisen alle Reihenanordnungen jeweils eine Mehrzahl von in einer einzelnen Reihe nebeneinander angeordneten LEDs auf.

Zur Erzielung der gewünschten Lichtstromverteilung ist das optische Element an die jeweilige Anordnung der primären LED-Struktur und der sekundären LED-Struktur angepasst. Insbesondere kann zweckmäßigerweise die mittlere Reihenanordnung von LEDs der primären LED-Struktur auf der Leiterplatte zu dem des optischen Elementes derart angeordnet sein, dass Licht der primären LEDs in eine Lichteintrittsfläche des Zentralabschnitts eingekoppelt und an dessen Austrittsfläche ausgekoppelt wird. Dabei kann vorgesehen sein, dass bei der beschriebenen Reihenanordnung von LEDs der primären LED-Struktur der Zentralabschnitt über die wirksame Längserstreckung des optischen Elementes identisch ist, d.h. die Gestaltung des Zentralabschnitts in Querrichtung unabhängig vom Längsort des optischen Elementes gestaltet ist.

Zweckmäßigerweise kann dies auch für die Gestaltung der Lateralabschnitte des optischen Elementes gelten, welche in den beschriebenen Reihenanordnungen der sekundären LED-Struktur angeordnet sein können. Insofern kann es zweckmäßig sein, wenn beidseitig zum Zentralabschnitt des optischen Elements jeweils ein Lateralabschnitt mit einem Lichtleiterbereich und einem Auskoppelbereich gestaltet ist, welcher jeweils ein lichtauskoppelndes Leuchtdichteareal bereitstellt zur Abgabe von kontrastverminderndem Aufhelllicht. Wie obenstehend schon ausgeführt kann dabei der Auskoppelbereich auch zum Leiten bzw. Führen des Lichtes insbesondere in lateraler Richtung ausgebildet sein, sodass der Auskoppelbereich lateral ausgedehnt sein kann. Dabei kann die Reihenanordnung von LEDs der sekundären LED-Struktur zu dem jeweils zugeordneten Lateralabschnitt so angeordnet sein, dass Licht der sekundären LEDs jeweils an einer Lichteintrittsfläche in den Lichtleiterbereich eines Lateralabschnitts eingekoppelt und im Auskoppelbereich ausgekoppelt wird, wobei der Auskoppelbereich durch einen Lichtleiterbereich, in welchem keine bzw. nur eine vernachlässigbare Lichtauskopplung erfolgt, vom Zentralbereich lateral beabstandet sein kann.

In einer zweckmäßigen, abgewandelten Ausführungsform kann das optische Element im Bereich eines Übergangs vom Zentralabschnitt in einen Lateralabschnitt so gestaltet, dass auch Licht der primären LED-Struktur in einen Lateralabschnitt eingeführt und in den Auskoppelbereich geleitet wird, wo es zusammen mit dem Licht der sekundären LED-Struktur ein zum Zentralabschnitt den Kontrast verminderndes Leuchtdichteareal bereitstellt. Insofern kann das am Auskoppelbereich des Lateralabschnittes das optische Element verlassende Licht ein Mischlicht sein, beispielsweise Anteile eines hauptsächlich in den gerichteten Beleuchtungslichtstrom geleiteten warmweißen Lichtes mit niedriger Farbtemperatur von LEDs der primären LED-Struktur und Licht mit höherer Farbtemperatur von LEDs der sekundären LED-Struktur umfassen. In solchen vorteilhaften Ausführungen der Erfindung, in welchen die primäre und die sekundäre LED-Struktur unabhängig voneinander ansteuerbar sind, kann zweckmäßigerweise ein Tag-Nacht-Rhythmus simuliert werden, indem beispielsweise der Anteil des Lichtes mit hoher Farbtemperatur der LEDs der sekundären LED-Struktur im Laufe des Tages reduziert oder gar abgeschaltet wird zur Anpassung an die Physiologie des Menschen. Es kann ferner zweckmäßig sein, wenn in Querrichtung zwischen Zentralabschnitt und Lateralabschnitt des optischen Elements jeweils ein intermediärer Abschnitt mit einer Lichteinkoppelfläche zur Einkopplung von Licht der primären LED-Struktur und zur Einkopplung von Licht der sekundären LED-Struktur und einer Lichtauskoppelfläche zur Bereitstellung eines weiteren Leuchtdichteareals für die Auskopplung von Licht der beiden LED-Strukturen gestaltet ist. Bei dieser Ausführungsform kann der Lateralabschnitt des optischen Elementes so gestaltet sein, dass das von diesem bereitgestellte Leuchtdichteareal im Wesentlichen nur Licht der sekundären LED-Struktur aufweist.

Diese Ausführungsform eignet sich insbesondere in solchen Fällen, bei welchen die LED-Strukturen wie obenstehend beschrieben in Reihe angeordnet sind. Das optische Element der erfindungsgemäßen Leuchtenbaugruppe kann dabei in Querrichtung zwischen dem Zentralabschnitt und den Lateralabschnitten jeweils einen intermediären Abschnitt mit einer Lichteinkoppel- und Lichtauskoppelfläche zur Bereitstellung eines weiteren Leuchtdichteareals zur Einkopplung von Licht aus der primären LED-Struktur und der sekundären LED-Struktur und zur Auskopplung beider Lichtanteile aufweisen. Eine solche Baugruppe, respektive das zugeordnete optische Element, kann demnach so gestaltet sein, dass der Zentralabschnitt ein Leuchtdichteareal für die Beleuchtungszwecke mit Licht von LEDs der primären LED-Struktur, der intermediäre Abschnitt ein Leuchtdichteareal für Mischlicht zur Aufhellung und der Lateralabschnitt ein Leuchtdichteareal mit Licht von LEDs der sekundären LED-Struktur zur Aufhellung bzw. zur Realisierung einer Tag/Nacht-Simulation bereitstellen.

Bei einer derartigen Gestaltung des optischen Elementes kann dieses neben der Lichtaustrittsfläche im Zentralabschnitt für den gerichteten Beleuchtungslichtstrom zu beiden Seiten jeweils zwei in Querrichtung beabstandete Leuchtdichteareale aufweisen, wobei das außen liegende, durch den Lateralabschnitt bereitgestellte Areal Licht mit einer hohen Farbtemperatur abgeben kann, das beispielsweise nachmittags abschaltbar ist. Dann kann das innen liegende Leuchtdichteareal, welches durch den intermediären Abschnitt bereitgestellt wird, für eine Kontrastminderung sorgen mittels einer Abstrahlung von Licht gleicher Farbtemperatur wie die des gerichteten Beleuchtungslichtstromes im Zentralabschnitt und damit für eine Reduzierung der psychologischen bzw. physiologischen Blendung.

Dabei kann das optische Element und die relative Anordnung zu den LED-Strukturen so ausgebildet sein, dass allein die Lateralabschnitte mit Licht der LEDs der sekundären LED-Struktur, insbesondere kaltweißem Licht zur Erzeugung eines großflächigen Leuchtdichteareal gespeist werden, dessen Lichtstrom wie beschrieben zum Abend hin auf null reduziert werden kann, um einen gesunden Schlaf zu ermöglichen.

Insbesondere zur Bereitstellung einer schmalen Bauform der erfindungsgemäßen Leuchtenbaugruppe kann auch vorgesehen sein, die LED-Anordnung so auszubilden, dass sie zumindest eine, in Längserstreckung des optischen Elementes verlaufende Reihe, insbesondere eine einzelne Reihe von hintereinander angeordneten LEDs aufweist, wobei LEDs der primären LED-Struktur in einer vorgegebenen Abfolge sich mit LEDs der sekundären LED-Struktur abwechseln. Die vorgegebene Abfolge kann beliebig gestaltet sein, beispielsweise so, dass auf eine LED der primären LED-Struktur eine LED der sekundären LED-Struktur in Längsrichtung folgt. Es ist jedoch auch jede andere Abfolge möglich, beispielsweise auf zwei in Reihe angeordneten LEDs der primären LED-Struktur folgen zwei in Längsrichtung nebeneinander angeordneten LEDs der sekundären LED-Struktur. Zweckmäßigerweise können lateral aufeinander folgende Lichtleit- und Lichtlenkabschnitte des optischen Elements in Längsrichtung an die Abfolge der primären LEDs und sekundären LEDs derart angepasst sein, dass an einem Längsort mit einer primären LED der Zentralabschnitt eine refraktive Strukturierung zur Lichtein- und Lichtauskopplung für die Bereitstellung des gerichteten Beleuchtungslichtstromes sowie einen Lateralabschnitt mit einem Lichtleiterbereich und einem Auskoppelbereich umfasst, wobei letzterer wiederum auch zur Lichtführungs- bzw. Lichtleitung ausgebildet sein kann, damit der Auskoppelbereich lateral ausgedehnt sein kann. Je nach spezifischer Ausführung des optischen Elementes kann die Ausgestaltung so sein, dass kein Licht der primären LED in Lateralabschnitte eingeführt wird. In einer anderen Ausführungsform kann jedoch, wie obenstehend schon beschrieben tatsächlich vorgesehen sein, dass die Gestaltung der Lichtleit- und Lichtführungsabschnitte des optischen Elementes derart ausgeführt ist, dass auch in einen Lateralabschnitt Licht der primären LEDs geführt und abgegeben wird.

Diese Anpassung der lateral aufeinander folgenden Lichtleit- und Lichtlenkabschnitte des optischen Elements in Längsrichtung an die Abfolge der primären LEDs und sekundären LEDs kann auch umfassen, dass an einem Längsort mit einer sekundären LED ein Mittenabschnitt ausgebildet ist, in welchem Licht in das optische Element eingekoppelt, jedoch in diesem Mittenabschnitt nicht ausgekoppelt wird. Stattdessen kann das Licht vom Mittenbereich in einen Lateralabschnitt mit einem sich lateral erstreckenden Lichtleiterbereich und einem Auskoppelbereich umgelenkt werden zur Bereitstellung eines Leuchtdichteareals im besagten Lateralabschnitt.

Zweckmäßigerweise können neben dem optischen Element der Leuchtenbaugruppe weitere Lichtleit- bzw. Lichtlenkbauteile Verwendung finden, um eine noch genauere Richtung und Führung des Lichtes bereitzustellen. Beispielsweise kann in Abstrahlrichtung des LEDs hinter dem optischen Element ein zusätzliches Lichtlenkelement wie ein quer über den Lateralabschnitt beschränkter Diffusor oder eine Prismenplatte angeordnet sein, um über den Lateralabschnitt insbesondere kaltweißes Licht großflächig und möglichst diffus abzustrahlen, was physiologisch vorteilhaft sein kann. Ferner kann zur Gestaltung einer vorgegebenen Lichtverteilung oder eines Blendschutzes innerhalb des Beleuchtungslichtstromes vorgesehen sein, in Abstrahlrichtung hinter dem optischen Element ein zusätzliches Lichtlenkelement wie ein lateral über dem Zentralabschnitt beschränktes Lichtraster, ein Lamellenraster oder eine Reflektoreinrichtung anzuordnen.

In bestimmten Ausführungen kann es auch möglich sein, derartige zusätzliche Lichtlenkelemente integral mit dem beschriebenen optischen Element herzustellen, beispielsweise in Form eines Mehrkomponenten- oder Mehrfarbenspritzgusses. Zur optimalen Gestaltung des Lateralabschnitts des optischen Elementes kann dieses in seinem lichtführenden Bereich mit einem transparenten Material und in seinem auskoppelnden Bereich mit einem transluzenten Material ausgebildet sein, beispielsweise mittels Koextrusion oder Mehrkomponentenspritzen.

Die Anordnung derartiger zusätzlicher Lichtlenkeinrichtungen ist nicht in jedem Fall über den Zentralabschnitt bzw. den Lateralabschnitt des optischen Elementes beschränkt. In einer besonders zweckmäßigen Ausführungsform kann auch vorgesehen sein, ein Licht- oder Lamellenraster in Querrichtung über den Zentralabschnitt und den Lichtführungsbereich des Lateralabschnitts anzuordnen. Diese Gestaltung kann insbesondere in solchen Ausführungsformen zweckmäßig sein, bei welchen sich der Lichtführungsbereich des Lateralabschnitts vom Zentralabschnitt nicht nur mit einer Querkomponente, sondern auch mit einer Längskomponente erstreckt, sodass einzelne Rasterelemente an der Außenwandung des Lichtführungsbereichs befestigbar sind.

Die Auskoppelelemente an einer Oberfläche des Auskoppelbereichs des Lateralabschnitts können je nach Ausführungsform an der Vorder- und/oder Rückseite in Bezug auf die Abstrahlrichtung angeordnet sein, wobei diese bekannten Ausprägungen wie Erhebungen, Vertiefungen aufweisen, die beispielsweise auch durch Bedruckung oder Mattierung erzeugt werden können. Auch für die Gestaltung des refraktiven Zentralabschnittes ist eine Mehrzahl von spezifischen Ausführungen erfindungsgemäß möglich. Beispielsweise kann dieser als Linse oder mit lichtlenkenden Strukturen wie Prismen ausgeführt sein. Insbesondere bei solchen Leuchtenbaugruppen, in welchen die LED-Anordnung zumindest eine Reihe von LEDs umfasst, welche zueinander beabstandet sind, kann zweckmäßigerweise das optische Element an Lichtlenkenden Oberflächen eine Längsstrukturierung zur Auflösung der Punktstrahleigenschaften des Leuchtmittels umfassen.

Die Leuchtenbaugruppe wird im Folgenden durch das Beschreiben einiger Ausführungsformen unter Bezugnahme auf die beiliegenden Figuren erläutert, wobei
- Figur 1: in einer Prinzipskizze eine Leuchtenbaugruppe einer ersten Ausführungsform in einer Schnittdarstellung,
- Figuren 2a, b: die in Figur 1 angegebene Leuchtenbaugruppe in Kombination mit weiteren Lichtlenkelementen,
- Figur 3: eine andere Ausführungsform einer Leuchtenbaugruppe in einer perspektivischen Teilansicht,
- Figuren 4a, b: zwei weitere, zu der in Figur 1 angegebenen Ausführungsform insbesondere in Bezug auf Halteelemente spezifizierte Leuchtenbaugruppen,
- Figur 5: eine weitere Ausführungsform einer Leuchtenbaugruppe mit einer Mehrzahl von zum optischen Element weiteren Lichtlenkelementen in einer Schnittdarstellung,
- Figur 6: eine weitere Ausführungsform einer Leuchtenbaugruppe mit einem speziellen Lichtraster in einer perspektivischen Ansicht,
- Figur 7a - c: eine rotationssymmetrische Ausführungsform einer Leuchtenbaugruppe in einer Aufsicht, einer perspektivischen Ansicht sowie in einer Schnittdarstellung,
- Figur 8: eine Ausführungsform einer erfindungsgemäßen Leuchtenbaugruppe, umfassend eine primäre und eine sekundäre LED-Struktur in einer Schnittdarstellung,
- Figur 9: eine erfindungsgemäße und zur Ausführungsform gemäß Figur 8 abgewandelte Leuchtenbaugruppe,
- Figur 10: eine Aufsicht auf eine weitere Ausführungsform einer erfindungsgemäß gestalteten, langgestreckten Leuchtenbaugruppe,
- Figur 11a: eine Darstellung des in Figur 10 angegebenen Schnittes S1-S1 senkrecht zur Längsachse, und
- Figur 11b: eine Darstellung des in Figur 10 angegebenen Schnittes S2-S2
zeigt.

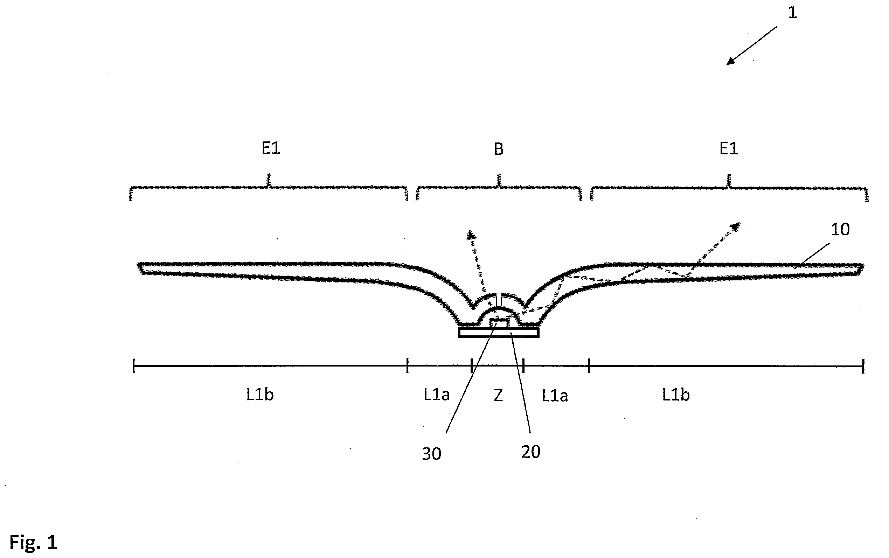

Figur 1 zeigt in einer Schnittdarstellung eine Leuchtenbaugruppe 1, welche eine langgestreckte Leiterplatte 20 umfasst, auf der mittig eine Vielzahl von LEDs 30 in Reihe mit vorgegebenem Abstand (pitch) angeordnet sind. In entsprechender Weise ist ein langgestrecktes optisches Element 10 gestaltet mit lateral aufeinanderfolgenden Lichtleit- und Lichtlenkabschnitten in dem Zentralabschnitt Z und den lateralen Bereichen L1a und L1b, um eine vorgegebene Lichtverteilungsfunktion zu erzeugen. Das optische Element weist im Zentralabschnitt Z einen tonnengewölbeartigen Querschnitt auf, dessen innere Seitenwandfläche sich im Wesentlichen bis zur Platine erstrecken kann, sodass die LED-Reihenanordnung in dem domartigen Hohlraum aufgenommen und geschützt ist. In der beschriebenen Ausführungsform schließen sich an beide äußeren Seitenwandabschnitte des tonnengewölbeartigen Zentralabschnittes zwei flügelartige Lateralabschnitte an, die jeweils durch Teilabschnitte L1a und L1b gebildet sind.

Die erzeugten Lichtareale sind in der Figur mit den Bezugszeichen B und E1 angegeben, wobei B das eigentliche Beleuchtungsareal mit hohem Beleuchtungslichtstrom und E1 ein Leuchtdichteareal mit ggf. blickwinkelabhängig, niedrigeren Lichtstrom bezeichnet, das sich lateral an das Beleuchtungsareal anschließt und zur Bereitstellung eines kontrastvermindernden Aufhelllichtes dient. Alle Areale erzeugen zusammen an der zu beleuchtenden Fläche die gewünschte Lichtstromverteilung. Das optische Element 10 ist in der beschriebenen Ausführungsform aus einem transparenten Material wie PMMA oder PC, insbesondere mittels eines Spritzgussverfahren oder eines Extrusionsverfahrens ausgebildet.

Die Reihenanordnung der LEDs 30 ist in lateraler Richtung mittig zum Zentralabschnitt Z des optischen Elementes 10 ausgerichtet. Erkennbar ist dieser Zentralabschnitt Z in der Ausführungsform gem. Fig. 1 mit einer refraktiven Strukturierung in Form etwa einer Konvex-Konkav-Linse ausgebildet, um den vorgegebenen Beleuchtungslichtstrom in Abstrahlrichtung hinter dem optischen Element 10 zu erzeugen. Der beidseitig zum Zentralabschnitt Z angeordnete Lateralabschnitt L1 in Form der beiden flügelartigen Fortsätze wird jeweils durch einen Lichtleiterbereich L1a und einen Auskoppelbereich L1b gebildet, wobei letzterer das vom lateral innen liegenden Lichtleiterbereich L1a geführte Licht über Totalreflexion weiter nach außen leitet und über, an seiner Oberfläche angeordnete optische Auskoppelelemente Aufhelllicht auskoppelt. Hierzu transmittiert ein Teil des von den LEDs 30 abgegebenen Lichtes, ausgehend vom Zentralabschnitt in den Lichtleiterbereich L1a hinein, wobei dieser Lichtanteil durch Gestaltung des Übergangs zwischen Zentralabschnitt Z und Lichtleiterbereich L1a einstellbar ist.

In der beschriebenen Ausführungsform ist die Quererstreckung des Zentralabschnitts Z kleiner als ein Sechstel, insbesondere kleiner als ein Achtel der Quererstreckung eines Lateralabschnitts L1=L1a + L1b, sodass für den Nutzer eine physiologisch sehr angenehmes, großflächiges und kontrastverminderndes Leuchtdichtdichteareal E1 benachbart zum Beleuchtungsareal bereitgestellt wird.

Zweckmäßigerweise ist die Leuchtenbaugruppe 1 so gestaltet, dass in die beiden seitlich zum Zentralabschnitt angeordneten Lateralabschnitte insgesamt zwischen 1 - 50% des gesamten Lichtstromes der LEDs 30 eingeführt wird, insofern beträgt der Lichtstrom im Beleuchtungsareal je nach Ausführungsform bei Vernachlässigung von Verlusten wie durch Streuung und Absorption zwischen 50 und 99%.

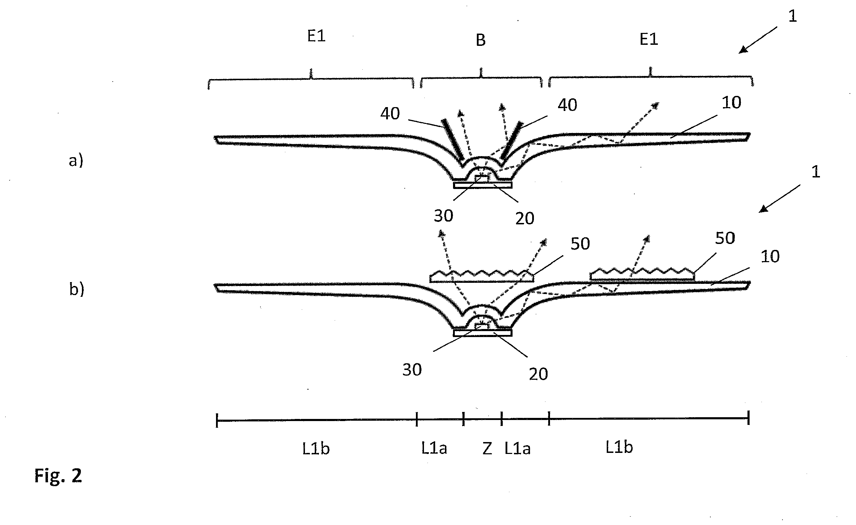

Die in den Figuren 2a, 2b dargestellten Leuchtenbaugruppen 1 sind in Bezug auf die Leiterplatte 20, die LEDs 30 sowie das einstückige optische Element 10 grundsätzlich identisch zu der Ausführungsform gemäß Fig. 1 ausgebildet. Darüber hinaus weist die in Figur 2a dargestellte Ausführungsform in Strahlrichtung hinter dem optischen Element im Bereich der lateralen Grenzen des Zentralabschnittes Z zwei flächige und sich mit dem optischen Element 10 in Längsrichtung erstreckende Reflektoren 40 mit vorgegebenem Winkel zur Mittenachse auf. Im Beleuchtungsareal B wird insofern durch das sukzessive Wirken der refraktiven Strukturierung des optischen Elements 10 im Zentralabschnitt und die nachfolgende Lichtlenkung durch die Reflektoren 40 die gewünschte Lichtverteilung innerhalb des Beleuchtungsareals B eingestellt ist.

Im Gegensatz zur Nutzung solcher Reflektoren weist die in Figur 2b wiederum im Querschnitt senkrecht zur Längsrichtung angegebene Ausführungsform einer Leuchtenbaugruppe 1 in Strahlrichtung hinter dem optischen Element 10 Prismeneinrichtungen 50 sowohl über dem Zentralabschnitt Z als auch über den Auskoppelbereich L1b des Lateralabschnittes L1 des optischen Elementes auf zur weiteren Lichtlenkung auf.

In einer nicht dargestellten Ausführungsform kann das optische Element 10 zusammen mit einem oder mehreren Lichtlenkelementen, beispielsweise einer Prismeneinrichtung 50 im Bereich des Lateralabschnittes L1 gem. Fig. 2b integral eingestellt sein.

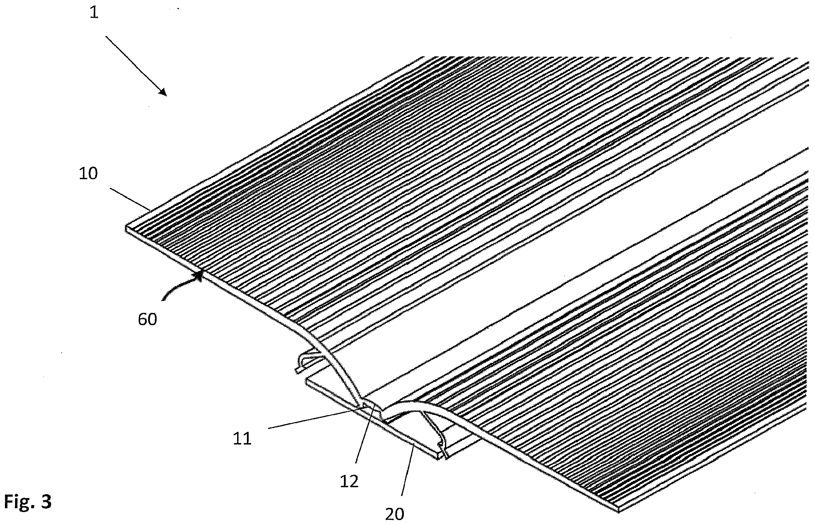

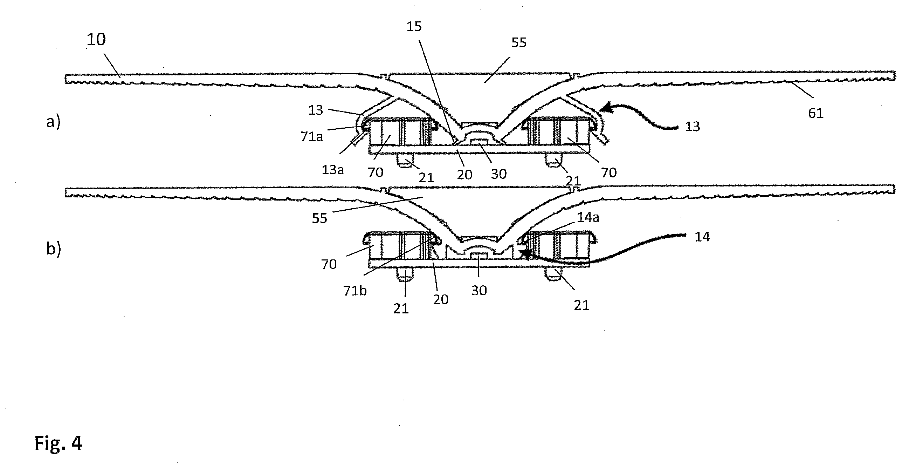

Figur 3 zeigt in einer perspektivischen Ansicht eine Leuchtenbaugruppe 1 mit einer Platine 20 sowie einem optischen Element 10, das in der beschriebenen Ausführungsform an seiner, der Platine abgewandten Außenseite und damit in Abstrahlrichtung eine Auskoppelstrukturierung in Form von Erhebungen oder Vertiefungen aufweist, durch welche das innerhalb des Volumens des Lateralabschnittes geführte Licht ausgekoppelt wird. Erkennbar bilden die innere Grenzfläche 11 und die äußere Grenzfläche 12 für die von den LEDs abgegebene Strahlung eine konvexartige Linse zur vorgegebenen Einstellung des Beleuchtungslichtstromes im Beleuchtungsareal. Die Figuren 4a, 4b zeigen weitere Ausführungsformen einer Leuchtenbaugruppe in einer Schnittdarstellung, die in Bezug auf die Gestaltung und Anordnung von Platine 20, der Reihenanordnung von LEDs 30 und des optischen Elementes 10 bis auf die nachfolgend beschriebenen Unterschiede gleich gestaltet sind, wobei hier beispielhafte Befestigungen des optischen Elements 10 an der Platine 20 dargestellt sind. In der Ausführungsform gemäß Figur 4a weist das optische Element 10 im Leiterbereich L1a des Lateralabschnitts Haltearme 13 auf, welche zum Zusammenwirken mit Halteelementen 70 ausgebildet sind, die beidseitig zur LED-Reihe auf der Platine 20 sitzen und sich mit Vorsprüngen 21 durch diese hindurch erstrecken, beispielsweise zur Befestigung der gesamten Leuchtenbaugruppe an einem Gehäuse.

Die Haltearme 13 weisen in der Querschnittsdarstellung zur Symmetrieebene des optischen Elementes 10 einen sich in der beschriebenen Ausführungsform im Winkel von etwa 45° erstreckenden und federnden Haltearm auf, an dessen Endbereich eine Rastfläche 13a angeordnet ist, welche mit einer zugeordneten Rastfläche 71a an einem Rastnocken 71 zum Befestigen des optischen Elementes zusammenwirkt, der sich am Haltelement 70 in Querrichtung nach außen erstreckt.

Das optische Element 10 der Figuren 4a, b weist im lateralen Auskoppelabschnitt L1b (s. Fig. 1) an seiner der LED zugewandten Seite eine Auskoppelstrukturierung 61 in Form von längs und parallel zueinander verlaufenden Rillen auf, welche dafür sorgen, dass Licht aus der Totalreflexionsbedingung herausgelenkt und an der gegenüber liegenden Grenzfläche das optische Element zur Bereitstellung des mit Bezug auf Figur 1 beschriebenen Leuchtdichteareals E1 verlässt. Bei dem in Figur 4a angegebenen Beispiel erstrecken sich ferner in Querrichtung über den Zentralabschnitt Z und den Lichtleiterbereich L1a des Lateralabschnittes L1 (siehe Figur 1) Rasterelemente 55 eines Lichtrasters zur Bereitstellung einer Entblendung für den Betrachter. Um die Reihenanordnung der LEDs 30 gegenüber äußeren Einflüssen wirkungsvoll zu schützen, weist das optische Element im Anschluss an den Zentralabschnitt Z beidseitig jeweils eine über die gesamte Längserstreckung verlaufende Lippe 15 auf, welche auf der Platine 20 aufliegt.

Bei der in Figur 4b gezeigten Leuchtenbaugruppe unterscheidet sich das optische Element 10 von dem der Ausführungsform gemäß Figur 4a allein in Bezug die Befestigung mit der Platine 20 bzw. dem Halteelement 70. Statt eines federnden Haltearms 13 ist hier ein sich bis auf die Platine 20 erstreckender Vorsprung 14 vorgesehen, welcher zum einen eine Abdichtung des die LED-Reihe aufnehmenden Hohlraums bereitstellen kann und zum anderen eine Anlagefläche 14a für einen innen liegenden Rastnocken 71, der radial nach innen weisend am Halteelement 70 angeordnet ist.

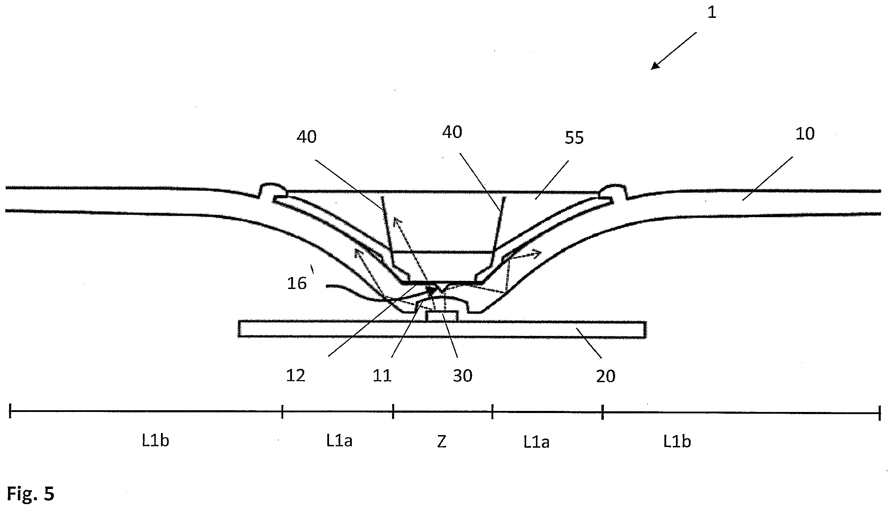

Figur 5 zeigt eine weitere Ausführungsform einer Leuchtenbaugruppe 1, die im Bereich des Zentralabschnitts Z und des Lichtleiterbereichs L1a ein Lichtraster aufweist, von welchem ein einzelnes Rastelement 55 in der Schnittdarstellung angegeben ist. Neben dem Lichtraster ist im Zentralabschnitt Z darüber hinaus eine Reflektoreinrichtung ähnlich der in Figur 2a gezeigten umfasst mit zwei sich in Längsrichtung erstreckenden Reflektoren 40.

Um den Anteil des in den Lateralabschnitt L1 gelenkten Lichtes zu erhöhen, weist die in Figur 5 angegebene Ausführungsform des optischen Elementes an der äußeren Grenzfläche 12 des Zentralabschnittes Z eine zentrisch in Längsrichtung verlaufende keilförmige Ausnehmung 16 als zusätzliches und integral mit dem optischen Element 10 ausgebildetes Lichtlenkelement auf.

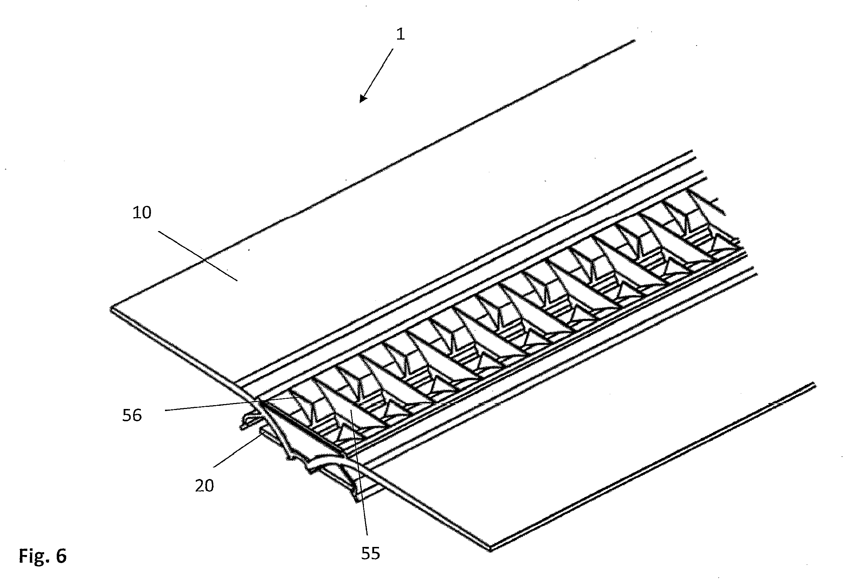

Bei der Ausführungsform gemäß Figur 6 findet wiederum ein als zusätzliches Lichtlenkelement ein Lichtraster mit einzelnen Rasterelementen 55 Anwendung, welche senkrecht zur Längserstreckung der Leuchtenbaugruppe und über die Quererstreckung des Zentralabschnittes Z und der beiden Lichtleiterbereiche L1a (s. Fig. 1) verlaufen. Zur Verbesserung der Entblendungswirkung sind an den Außenflächen beider Lichtleiterbereiche Finnen 56 vorgesehen, welche sich mit den Rasterelementen in der angegebenen Ausführungsform abwechseln und sich nicht in den Zentralabschnitt hinein erstrecken.

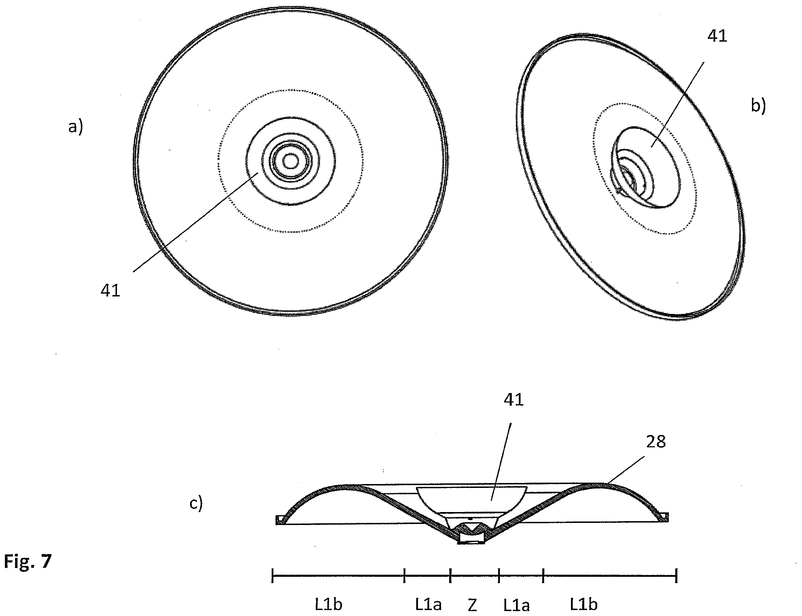

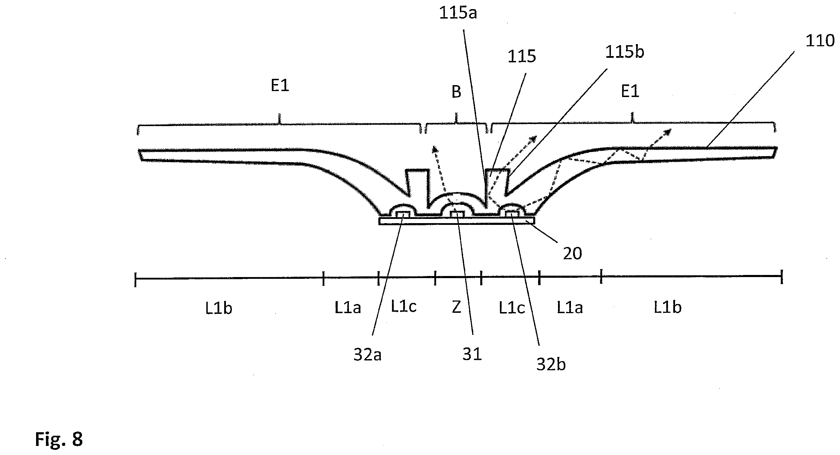

Figuren 7a bis 7c zeigen eine Leuchtenbaugruppe, welche rotationssymmetrisch gestaltet ist, wobei eine einzelne LED oder eine Mehrzahl von LEDs auf einer Kreisfläche auf der Platine angeordnet sind. Wie aus den Figuren hervorgeht, ist im Zentralabschnitt an das optische Element ein topfartiger Reflektor 41 platziert zur Einstellung eines vorgegebenen Beleuchtungslichtstromes zusammen mit den refraktiven Eigenschaften des Zentralabschnitts Z des optischen Elementes 28. Auch bei dieser Ausführungsform schließen sich in der Schnittdarstellung der Fig. 7c ein Lichtleiterbereich L1a und ein Auskoppelbereich L1b an den Zentralabschnitt Z an. Figur 8 zeigt in einer Schnittdarstellung senkrecht zur Längserstreckung eine Ausführungsform einer erfindungsgemäß ausgebildeten langgestreckten Leuchtenbaugruppe.

Die LED-Anordnung umfasst eine langgestreckte Platine 20, welche mittig eine primäre LED-Struktur in Form einer LED-Reihe 31 aufweist, welcher lateral beabstandet zu beiden Seiten jeweils eine sekundäre LED-Struktur in Form einer LED-Reihe 32a, b zugeordnet sind. In der beschriebenen Ausführungsform sind die LEDs der primären LED-Struktur und die LEDs der sekundären LED-Struktur unabhängig voneinander ansteuerbar und weisen darüber hinaus eine unterschiedliche Farbtemperatur auf. Die Farbtemperatur der mittleren LED-Reihe 31 liegt niedriger als die Farbtemperatur der hierzu lateral beabstandeten LED-Reihen 32a, b. Die sekundären LEDs strahlen in der beschriebenen Ausführungsform ein kaltweißes Licht, die primären LEDs ein warmweißes Licht aus. Allgemein können primäre und sekundäre LEDs unterschiedliche spektrale Emissionsspektren aufweisen.

Die beiden zur Längsachse des optischen Elementes 110 entfernt angeordneten Lateralabschnitte L1, umfassend jeweils einen Auskoppelbereich L1b sowie einen Lichtleiterbereich L1a, sind im Wesentlichen identisch zu denen der vorstehend beschriebenen Ausführungsformen ausgebildet. Insofern können sie auch die oben beschriebenen Lichtlenkelemente wie Prismeneinrichtung bzw. die beschriebenen Auskoppelelemente aufweisen. Gleiches gilt für den Zentralabschnitt Z, in welchem der vorgegebene Beleuchtungslichtstrom zur Bereitstellung des Beleuchtungsareals B ausgebildet ist. Das optische Element weist entsprechend den drei LED-Reihen drei domförmige Hohlräume auf, welche die auf der Platine angeordneten LED-Reihen aufnehmen.

Zweckmäßigerweise entspricht bei der erfindungsgemäßen Ausführungsform der Abstand der LEDs zu der den jeweiligen Domhohlraum festlegenden und zur Platine gerichteten Fläche des optischen Elementes 110 dem Abstand zwischen benachbarten LEDs einer Reihe. Demnach ist Fig. 8 entnehmbar, dass der Abstand benachbarter LEDs der Primärstruktur etwas größer ist als der der Abstand benachbarter LEDs der Sekundärstruktur, da die LEDs der mittleren Reihe 31 einen größeren Abstand zum optischen Element aufweisen als die benachbartes Reihen 32a, b.

Im Unterschied zu den mit Bezug auf die Figuren 1, 2a, b und Figur 5 beschriebenen Ausführungsformen ist das optische Element 110 der Leuchtenbaugruppe gemäß Figur 8 so ausgestaltet, dass das Licht der primären LED-Reihe 31 allein in das Beleuchtungsareal B abgestrahlt wird. Erkennbar weist das in Figur 8 angegebene optische Element 110 zwischen dem Zentralabschnitt und dem Lateralabschnitt einen intermediären Abschnitt L1c auf, in welchem das Licht der sekundären LED-Reihe 32a, b einerseits in den Leiterbereich L1a des Lateralabschnitts eingekoppelt, jedoch teilweise auch in einen sich in Strahlrichtung erstreckenden Wandabschnitt 115 an dessen Begrenzungsflächen 115a, 115b das Licht totalreflektiert wird, bis es die hier etwa parallel zur Platine 20 verlaufende Begrenzungsfläche durchstößt und den als Lichtleiter wirkenden Wandabschnitt 115 verlässt. In der beschriebenen Ausführungsform sind die lateral zum Zentralabschnitt angeordneten Bereiche symmetrisch zur Längsmitte ausgebildet, sodass sich ein symmetrisches Abstrahlverhalten in den beiden Leuchtdichtearealen E1 einstellt.

Die Leuchtenbaugruppe gemäß Figur 8 ist insbesondere geeignet, um neben dem Beleuchtungsareal B mit einem hohen Lichtstrom auch ein Leuchtdichteareal E1 zur Abgabe von kontrastverminderndem Aufhelllicht bereitzustellen, wobei die Höhe des Lichtstroms insbesondere an den Tageszyklus angepasst werden kann. Dabei kann auch vorgesehen sein, die sekundären LED-Reihen 32a, 32b mit LEDs auszustatten, welche eine veränderbare Farbtemperatur aufweisen, sodass beispielsweise morgens die Aufhellung mit Licht hoher Farbtemperatur eingestellt werden kann und im Laufe des Tages die Intensität des Aufhelllichtes vermindert und/oder die Farbtemperatur des Aufhelllichtes an die physiologischen Bedürfnisse angepasst, insbesondere erniedrigt und an die Farbtemperatur des Beleuchtungsareals B angeglichen werden kann.

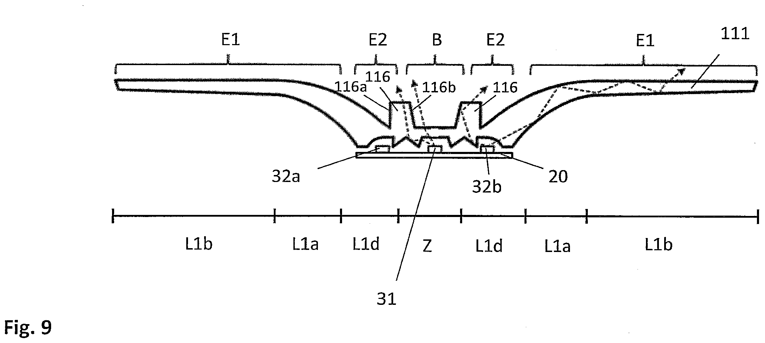

Figur 9 zeigt in einer Schnittdarstellung senkrecht zur Längserstreckung eine weitere Ausführungsform einer erfindungsgemäß ausgebildeten, langgestreckten Leuchtenbaugruppe, welche ähnlich der in Figur 8 dargestellten aufgebaut ist. Insbesondere die auf der Platine 20 platzierte LED-Anordnung, umfassend eine primäre LED-Struktur und zu dieser lateral beabstandet zu beiden Seiten jeweils eine sekundäre LED-Struktur kann identisch mit der mit Bezug auf Figur 8 beschriebenen LED-Anordnung einschließlich der erläuterten Varianten ausgebildet sein. Die einzelnen LED-Reihen sind wieder jeweils tonnengewölbeartig vom optischen Element 111 umgeben, wobei der Zentralabschnitt Z sowie der Lateralabschnitt L1 bzw. der Lichtleiterbereich L1a wie der Auskoppelbereich L1b im Wesentlichen identisch zu der Gestaltung des optischen Elementes 28 der Figur 8 ausgebildet ist.

Ein Unterschied besteht in der Gestaltung des intermediären Bereichs L1d, welcher hier durch die Gestaltung entsprechender Lichtleit- bzw. Führungsbereiche und -flächen derart ausgeführt ist, dass zwischen dem Beleuchtungsareal B, mit welchem der Lichtstrom durch Licht der primären LED-Struktur festgelegt wird und im Leuchtdichteareal E1, in welchem der Lichtstrom durch Licht der sekundären LED-Struktur festgelegt wird, ein zweites Leuchtdichteareal E2 erzeugt wird. Dabei wird der Lichtstrom in diesem Areal durch Licht aus der ersten Primärstruktur und der zweiten Primärstruktur festgelegt. Insofern ist mit den intermediären Bereichen L1d des optischen Elementes 111 jeweils eine Art Mischkammer festgelegt, in welchen Licht aus der mittleren LED-Reihe 31 und der jeweiligen benachbarten LED-Reihe 32a bzw. 32b zusammengeführt wird. Hierzu weisen die tonnengewölbeartigen Abschnitte der einzelnen LED-Reihen des optischen Elementes 111 für die LED-Reihen zusätzliche optische Lichtlenkelemente in Form von Totalreflexionsflächen auf, über welche die jeweiligen Lichtteile in den Wandabschnitt 116 umgelenkt werden. Bei dieser Ausführungsform weisen die beiden intermediären Bereiche L1d hierzu ähnlich wie bei der in Figur 8 dargestellten Ausführungsform einen als Lichtleiter wirkenden und sich in Strahlrichtung erstreckenden Wandabschnitt 116 auf, an dessen Begrenzungsflächen 116a, b Licht totalreflektiert wird, bis es an der vorderen Grenzfläche aus dem Wandabschnitt 116 austritt. Beide Wandabschnitte 116 verlaufen über die gesamte optisch wirksame Längserstreckung des optischen Elementes 111.

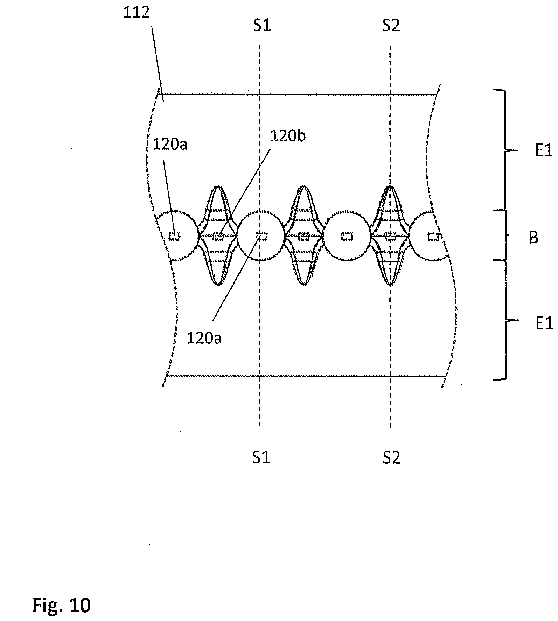

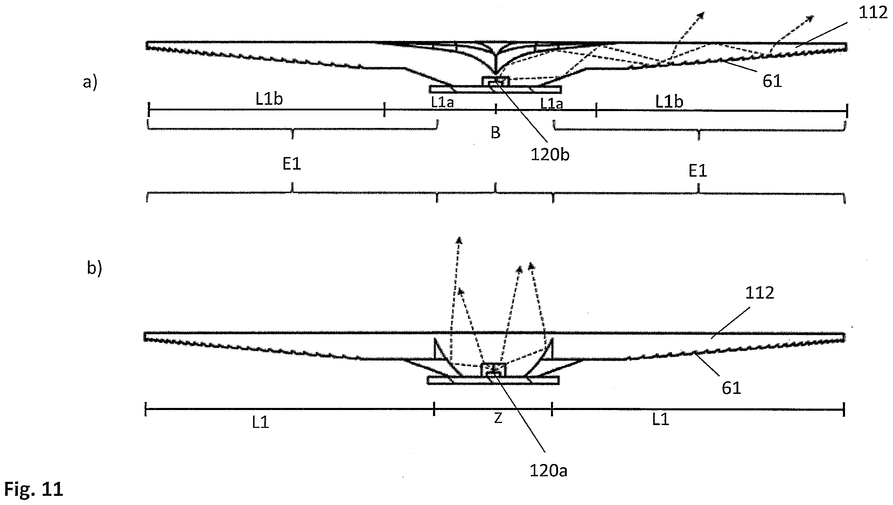

Mit Bezug auf die Figuren 10 und 11 wird eine weitere Ausführungsform einer erfindungsgemäß gestalteten Leuchtenbaugruppe erläutert, welche wiederum langgestreckt ausgebildet ist und eine LED-Anordnung aufweist, welche eine Reihenanordnung mit einer vorgegebenen Abfolge von LEDs der primären LED-Struktur und LEDs der sekundären LED-Struktur aufweist. In der beschriebenen Ausführungsform folgt in der Reihenanordnung auf eine einzelne LED der primären LED-Struktur eine einzelne LED der sekundären LED-Struktur usw. Eine Aufsicht auf eine so gestaltete erfindungsgemäße Leuchtenbaugruppe mit Blick auf das optische Element 112 zeigt Figur 10.

Wiederum können beide LED-Arten 120a, 120b eine unterschiedliche Farbtemperatur bzw. spektrales Emissionsverhalten und/oder unterschiedliche Steuerkreise aufweisen. Erkennbar weist das optische Element 112 eine entsprechend der Abfolge der primären bzw. sekundären LEDs angepasste optische Gestaltung derart auf, dass das Licht der primären LEDs 120a zur Gestaltung des Beleuchtungslichtstromes B genutzt wird, während das Licht der sekundären LEDs 120b zur Gestaltung des Lichtstromes im Leuchtdichteareal E1 verwendet wird. Die geometrische Gestaltung des optischen Elementes 112 zur Erzeugung der angegebenen Leuchtareale ist in Figur 11a, b angegeben, welche den jeweiligen Schnitt durch die in Figur 10 gezeichneten Ebenen S1-S1 und S2-S2 zeigen. Erkennbar wird in der Schnittebene S2-S2 im Lateralabschnitt L1a Licht von der LED 120b geführt und im Auskoppelbereich L1b über die hier rückseitig an der Oberfläche gestalteten Rillenstruktur umgelenkt und verlassen das optische Element an der gegenüber liegenden Grenzfläche. Nicht lateral beanstandet, sondern in dieser Ausführungsform in Längsrichtung beabstandet ist das optische Element 112 in der Schnittebene S1-S1 zur Erzeugung des Beleuchtungsareals B ausgebildet, siehe Figur 11b. In der beschriebenen Ausführungsform wird das gesamte Licht der primären LEDs 120a zur Erzeugung des Beleuchtungslichtstromes B genutzt, während das Licht der LEDs der sekundären LED-Struktur zur Erzeugung des Leuchtdichteareals E1 verwendet wird.

### Bezugszeichenliste

- 1: Leuchtenbaugruppe
- 10: Optisches Element
- 11, 12: Grenzfläche
- 13: Haltearm
- 13a: Rastfläche
- 14: Vorsprung
- 14a: Anlagefläche
- 15: Lippe
- 16: Haltenocken
- 20: Platine
- 21: Vorsprung
- 28: Optisches Element
- 30: LED-Reihe
- 31: Primäre LED-Reihe
- 32a, b: Sekundäre LED-Reihe
- 40: Reflektor
- 41: Reflektor
- 50: Prismeneinrichtung
- 55: Rasterelement
- 56: Finne
- 60: Auskoppelstrukturierung
- 61: Auskoppelstrukturierung
- 70: Halteelement
- 71a, b: Rastnocken
- 110, 111:
- 112: Optisches Element
- 115: Wandabschnitt
- 115a, b: Begrenzungsfläche
- 116: Wandabschnitt
- 116a, b: Begrenzungsfläche
- 120a: Primäre LED
- 120b: Sekundäre LED
- B: Beleuchtungsareal
- E1: Leuchtdichteareal
- E2: Leuchtdichteareal
- L1: Lateralabschnitt
- L1a: Lichtleiterbereich
- L1b: Auskoppelbereich
- L1c: Intermediärer Bereich
- L1d: Intermediärer Bereich
- Z: Zentralabschnitt

## Patentansprüche

1. Leuchtenbaugruppe umfassend ein einstückiges optisches Element (110, 111, 112) mit Lichtleit- bzw. Lichtlenkabschnitten mit einem Zentralabschnitt (Z) umfassend eine refraktive Strukturierung zur Lichtein- und Lichtauskopplung für die Bereitstellung eines gerichteten Lichtstromes zu Beleuchtungszwecken sowie einen Lateralabschnitt (L1) mit einem Auskoppelbereich (L1B) zur Abgabe von kontrastminderndem Aufhelllicht und mit einer zum optischen Element (110, 111, 112) ausgerichteten und in Beleuchtungsrichtung vor dem optischen Element angeordnete Lichtquellen-Anordnung umfassend einen Lichtquellen-Träger mit einer Mehrzahl von punktförmigen Lichtquellen, insbesondere Licht emittierenden Halbleitereinrichtungen wie LEDs oder Laserdioden, wobei der Lateralabschnitt (L1) ferner einen Lichtleiterbereich (L1a) und der zu diesem lateral äußere Auskoppelbereich (L1b) an einer Oberfläche angeordnete optische Auskoppelelemente (60, 61) umfasst zur Auskopplung des kontrastmindernden Aufhelllichts lateral zum gerichteten Lichtstrom, wobei die Lichtquellen-Anordnung eine primäre Lichtquellen-Struktur und eine sekundäre Lichtquellen-Struktur aufweist, **dadurch gekennzeichnet, dass** Lichtquellen der primären Lichtquellen-Struktur und Lichtquellen der sekundären Lichtquellen-Struktur ein unterschiedliches Emissionsspektrum und/oder getrennt ansteuerbare Stromversorgungen aufweisen.

2. Leuchtenbaugruppe nach Anspruch 1, **dadurch gekennzeichnet, dass** die Leuchtenbaugruppe langgestreckt ist und die Lichtquellen-Anordnung zumindest eine mittlere Reihenanordnung (31) von Lichtquellen der primären Lichtquellen-Struktur aufweist, wobei beidseitig zur Längserstreckung jeweils zumindest eine zur mittleren Reihenanordnung der primären Lichtquellen-Struktur lateral beabstandete Reihenanordnung (32a, b) von Lichtquellen der sekundären Lichtquellen-Struktur angeordnet ist.

3. Leuchtenbaugruppe nach Anspruch 1 oder 2, **dadurch gekennzeichnet, dass** die mittlere Reihenanordnung von Lichtquellen der primären Lichtquellen-Struktur zum Zentralabschnitt (Z) des optischen Elements (110, 111, 112) derart angeordnet ist, dass Licht der primären Lichtquellen in die Lichteintrittsfläche des Zentralabschnitt eingekoppelt und an dessen Austrittsfläche ausgekoppelt wird.

4. Leuchtenbaugruppe nach Anspruch 2 oder 3, **dadurch gekennzeichnet, dass** beidseitig zum Zentralabschnitt des optischen Elements (110, 111, 112) jeweils ein Lateralabschnitt (L1) mit einem Lichtleiterbereich (L1a) und einem Auskoppelbereich (L1b) zur Abgabe von kontrastminderndem Aufhelllicht gestaltet ist, wobei die Reihenanordnungen von Lichtquellen der sekundären Lichtquellen-Struktur zu den Lateralabschnitten so angeordnet sind, dass Licht der sekundären Lichtquellen jeweils an einer Lichteintrittsfläche in den Lichtleiterbereich eines Lateralabschnitts eingekoppelt wird.

5. Leuchtenbaugruppe nach einem der Ansprüche 2, 3 oder 4, **dadurch gekennzeichnet, dass** zwischen Zentralabschnitt (B) und Lateralabschnitt (L1) jeweils ein intermediärer Abschnitt (L1d) mit einer Lichteinkoppel- und Lichtauskoppelfläche zur Einkopplung von Licht der primären Lichtquellen-Struktur und der sekundären Lichtquellen-Struktur und zur Auskopplung beider Lichtanteile gestaltet ist.

6. Leuchtenbaugruppe nach Anspruch 1, **dadurch gekennzeichnet, dass** die Lichtquellen-Anordnung eine einzelne Reihe von nebeneinander angeordneten Lichtquellen aufweist, wobei Lichtquellen der primären Lichtquellen-Struktur in einer vorgegebenen Abfolge mit Lichtquellen der sekundären Lichtquellen-Struktur abwechseln.

7. Leuchtenbaugruppe nach Anspruch 6, **dadurch gekennzeichnet, dass** die Lichtleit- und Lichtlenkabschnitte (L1a, L1b) des optischen Elements (112) in Längsrichtung an die Abfolge der primären Lichtquellen und sekundären Lichtquellen angepasst sind, derart, dass an einem Längsort mit einer primären Lichtquelle der Zentralabschnitt umfassend die refraktive Strukturierung zur Lichtein- und Lichtauskopplung für die Bereitstellung des gerichteten Lichtstromes zu Beleuchtungszwecken sowie einen Lateralabschnitt (L1) mit einem Lichtleiterbereich (L1a) und einen Auskoppelbereich (L1b) mit an einer Oberfläche angeordneten optischen Auskoppelelementen (61) umfasst.

8. Leuchtenbaugruppe nach Anspruch 6 oder 7, **dadurch gekennzeichnet, dass** die Lichtleit- und Lichtlenkabschnitte des optischen Elements in Längsrichtung an die Abfolge der primären Lichtquellen und sekundären Lichtquellen angepasst sind, derart, dass an einem Längsort mit einer sekundären Lichtquelle ein Mittenabschnitt ausgebildet ist, in welchem Licht in das optische Element eingekoppelt, jedoch nicht ausgekoppelt wird und in einen Lateralabschnitt mit einem sich lateral erstreckenden Lichtleiterbereich und einen Auskoppelbereich mit an seiner Oberfläche angeordneten optischen Auskoppelelementen umgelenkt wird.

9. Leuchtenbaugruppe nach einem der Ansprüche 1 bis 8, **dadurch gekennzeichnet, dass** in Lichtstrahlrichtung hinter dem optischen Element (110, 111, 112) ein zusätzliches Lichtlenkelement wie ein lateral über den Zentralabschnitt (Z) beschränktes Lichtraster (55), ein Lamellenraster oder eine Reflektoreinrichtung (40, 41) angeordnet ist.

10. Leuchtenbaugruppe nach einem der Ansprüche 1 bis 9, **dadurch gekennzeichnet, dass** in Beleuchtungsrichtung hinter dem optischen Element ein zusätzliches Lichtlenkelement wie ein quer über den Lateralabschnitt beschränkter Diffusor oder eine Prismenplatte (50) angeordnet ist.

11. Leuchtenbaugruppe nach einem der Ansprüche 9 oder 10, **dadurch gekennzeichnet, dass** das zusätzliche Lichtlenkelement integral mit dem optischen Element (110, 111, 112) hergestellt ist.

12. Leuchtenbaugruppe nach einem der Ansprüche 1 bis 11, **dadurch gekennzeichnet, dass** der Lateralabschnitt (L1) in seinem lichtführenden Bereich (L1a) ein transparentes Material und in einem auskoppelndem Bereich (L1b) ein transluzentes Material umfasst.

13. Leuchtenbaugruppe nach einem der Ansprüche 1 bis 12, **dadurch gekennzeichnet, dass** in Beleuchtungsrichtung hinter dem optischen Element ein zusätzliches Lichtlenkelement wie ein lateral über dem Zentralabschnitt (Z) und dem Lichtführungsbereich (L1a) des Lateralabschnittes (L1) beschränktes Licht- oder Lamellenraster (55) angeordnet ist.

14. Leuchtenbaugruppe nach einem der Ansprüche 1 bis 13, **dadurch gekennzeichnet, dass** die Auskoppelelemente (60, 61) an der Oberfläche des Auskoppelbereichs (L1b) des Lateralabschnitts (L1) an der Vorder- und/oder Rückseite angeordnet sind.

## Claims

1. Luminaire assembly comprising a one-piece optical element (110, 111, 112) with light conducting or light directing sections with a central section (Z) comprising a refractive structuring for coupling and decoupling light for providing a directional flux for illumination purposes as well as a lateral section (L1) with a decoupling area (L1B) for the emission of contrast-reducing fill light and with a light source arrangement, aligned with the optical element (110, 111, 112) and placed in the illumination direction ahead of the optical element, comprising a light source carrier with a multitude of point light sources, in particular of light emitting semiconductor devices such as LED's or laser diodes, wherein the lateral section (L1) furthermore comprises a light guide area (L1a) and the outer decoupling area (L1b) laterally thereto comprises optical decoupling elements (60, 61) placed on a surface for decoupling the contrast-reducing fill light laterally to the directional flux, wherein the light source arrangement has a primary light source structure and a secondary light source structure, **characterized in that** light sources of the primary light source structure and light sources of the secondary light source structure have a different emission spectrum and/or separately controllable power supplies.

2. Luminaire assembly according to claim 1, **characterized in that** the luminaire assembly is elongated and the light source arrangement has at least one central row arrangement (31) of light sources of the primary light source structure, wherein at least one row arrangement (32a, b) of light sources of the secondary light source structure is placed spaced laterally from the central row arrangement of the primary light source structure on each of the two sides of the longitudinal extension.

3. Luminaire assembly according to claim 1 or 2, **characterized in that** the central row arrangement of light sources of the primary light source structure is placed with respect to the central section (Z) of the optical element (110, 111, 112) in such a manner that light of the primary light sources is coupled into the light entry surface of the central section or is decoupled on its exit surface.

4. Luminaire assembly according to claim 2 or 3, **characterized in that** a lateral section (L1) with a light guide area (L1a) and a decoupling area (L1b) is designed on each of the two sides of the central section of the optical element (110, 111, 112) for emitting contrast-reducing fill light, wherein the row arrangements of light sources of the secondary light source structure are placed with respect to the lateral sections in such a manner that light of the secondary light sources is coupled respectively on a light entry surface into the light guide area of a lateral section.

5. Luminaire assembly according to one of the claims 2, 3 or 4, **characterized in that** an intermediate section (L1d) with a light coupling and a light decoupling surface is designed respectively between the central section (B) and the lateral section (L1) for coupling light of the primary light source structure and of the secondary light source structure and for decoupling both light portions.

6. Luminaire assembly according to claim 1, **characterized in that** the light source arrangement has a single row of light sources placed the one next to the other, wherein light sources of the primary light source structure alternate in a predetermined sequence with light sources of the secondary light source structure.

7. Luminaire assembly according to claim 6, **characterized in that** the light conducting and light directing sections (L1a, L1b) of the optical element (112) are adapted in the longitudinal direction to the sequence of the primary light sources and secondary light sources in such a manner that the central section comprising the refractive structuring for coupling and decoupling light for providing the directional flux for illumination purposes at a longitudinal location with a primary light source as well as a lateral section (L1) with a light guide area (L1a) and a decoupling area (L1b) with optical decoupling elements (61) placed on a surface.

8. Luminaire assembly according to claim 6 or 7, **characterized in that** the light conducting and light directing sections of the optical element are adapted in the longitudinal direction to the sequence of the primary light sources and secondary light sources in such a manner that a central section is designed at a longitudinal location with a secondary light source, central section in which light is coupled into the optical element, without however being decoupled and is deflected into a lateral section with a laterally extending light guide area and a decoupling area with optical decoupling elements placed on a surface.

9. Luminaire assembly according to one of the claims 1 to 8, **characterized in that** an additional light guiding element such as a light grid (55) limited laterally by the central section (Z), a lamellar grid or a reflector device (40, 41) is placed in the light beam direction behind the optical element (110, 111, 112).

10. Luminaire assembly according to one of the claims 1 to 9, **characterized in that** an additional light guiding element such as a diffusor limited transversely by the lateral section or a prism plate (50) is placed in the illumination direction behind the optical element.

11. Luminaire assembly according to one of the claims 9 or 10, **characterized in that** the additional light guiding element is produced in one piece with the optical element (110, 111, 112).

12. Luminaire assembly according to one of the claims 1 to 11, **characterized in that** the lateral section (L1) comprises a transparent material in its light conducting area (L1a) and a translucent material in a decoupled area (L1b).

13. Luminaire assembly according to one of the claims 1 to 12, **characterized in that** an additional light guiding element such as a light or lamellar grid (55) limited laterally by the central section (Z) and the light conducting area (L1a) is placed in the illumination direction behind the optical element.

14. Luminaire assembly according to one of the claims 1 to 13, **characterized in that** the decoupling elements (60, 61) are placed on the surface of the decoupling area (L1b) of the lateral section (L1) on the front and/or rear side.

## Revendications

1. Ensemble de luminaires comprenant un élément optique en une pièce (110, 111, 112) avec des sections de guidage ou de direction de la lumière avec une section centrale (Z) qui comprend une structuration réfractive pour le couplage et le découplage de la lumière pour la mise à disposition d'un flux lumineux dirigé à des fins d'éclairage ainsi qu'une section latérale (L1) avec une zone de découplage (L1B) pour émettre de la lumière d'éclaircissement réduisant les contrastes et avec un arrangement de sources de lumière alignées sur l'élément optique (110, 111, 112) et placé dans le sens de l'éclairage devant l'élément optique, arrangement qui comprend un support de sources de lumière avec une multitude de sources de lumière en forme de point, en particulier des dispositifs semiconducteurs qui émettent de la lumière, comme des LED ou des diodes laser, cependant que la section latérale (L1) comprend de plus une zone de guide de lumière (L1a) et les éléments découplage optiques (60, 61) placés sur une surface par rapport à cette section de découplage extérieure latéralement pour le découplage de la lumière d'éclaircissement réduisant les contrastes latéralement par rapport au flux lumineux dirigé, cependant que l'arrangement de sources de lumière présente une structure primaire de sources de lumière et une structure secondaire de sources de lumière, **caractérisé en ce que** des sources de lumière de la structure primaire de sources de lumière et des sources de lumière de la structure secondaire de sources de lumière présentent un spectre d'émission différent et/ou des alimentations de courant qui peuvent être commandées séparément.

2. Ensemble de luminaires selon la revendication 1, **caractérisé en ce que** l'ensemble de luminaires est allongé et l'arrangement de sources de lumière présente au moins un arrangement en série central (31) de sources de lumière de la structure primaire de sources de lumière, cependant qu'au moins un arrangement en série (32a, b) de sources de lumière de la structure secondaire de sources de lumière, espacé latéralement de l'arrangement en série central de la structure primaire de sources de lumière est placé de chacun des deux côtés de l'extension longitudinale.

3. Ensemble de luminaires selon la revendication 1 ou 2, **caractérisé en ce que** l'arrangement en série central (31) de sources de lumière de la structure primaire de sources de lumière est placé par rapport à la section centrale (Z) de l'élément optique (110, 111, 112) de telle manière que de la lumière des sources de lumière primaires est couplée dans la surface d'entrée de la lumière de la section centrale et est découplée sur la surface de sortie de celle-ci.

4. Ensemble de luminaires selon la revendication 2 ou 3, **caractérisé en ce qu'**une section latérale (L1) avec une zone de guide de lumière (L1a) et une zone de découplage (L1b) est configurée sur chacun des deux côtés de la section centrale de l'élément optique (110, 111, 112) pour émettre de la lumière d'éclaircissement réduisant les contrastes, cependant que les arrangements en série de sources de lumière de la structure secondaire de sources de lumière sont placés par rapport aux sections latérales de telle manière que de la lumière des sources de lumière secondaires est couplée respectivement sur une surface d'entrée de la lumière dans la zone de guide de lumière d'une section latérale.

5. Ensemble de luminaires selon l'une des revendications 2, 3 ou 4, **caractérisé en ce qu'**une section intermédiaire (L1d) avec une surface de couplage de lumière et une surface de découplage de lumière est configurée respectivement entre la section centrale (B) et la section latérale (L1) pour coupler de la lumière de la structure primaire de sources de lumière et de la structure secondaire de sources de lumière et pour le découplage des deux fractions de lumière.

6. Ensemble de luminaires selon la revendication 1, **caractérisé en ce que** l'arrangement de sources de lumière présente une seule rangée de sources de lumière placées l'une à côté de l'autre, cependant que des sources de lumière de la structure primaire de sources de lumière alternent dans une séquence prédéfinie avec des sources de lumière de la structure secondaire de sources de lumière.

7. Ensemble de luminaires selon la revendication 6, **caractérisé en ce que** les sections de guidage et les sections de direction de la lumière (L1a, L1b) de l'élément optique (112) sont adaptées dans le sens longitudinal à la séquence des sources primaires de lumière et des sources secondaires de lumière de telle manière qu'à un endroit longitudinal avec une source primaire de lumière la section centrale qui comprend la structuration réfractive pour le couplage et le découplage de la lumière pour la mise à disposition du flux lumineux dirigé à des fins d'éclairage comprend une section latérale (L1) avec une zone de guide de lumière (L1a) et une zone de découplage (L1b) avec des éléments optiques de découplage (61) placés sur une surface.

8. Ensemble de luminaires selon la revendication 6 ou 7, **caractérisé en ce que** les sections de guidage et les sections de direction de la lumière de l'élément optique sont adaptées dans le sens longitudinal à la séquence des sources primaires de lumière et des sources secondaires de lumière de telle manière qu'à un endroit longitudinal avec une source secondaire de lumière une section centrale est formée dans laquelle de la lumière est couplée dans l'élément optique sans cependant être découplée et est déviée dans une section latérale avec une zone de guide de lumière qui s'étend latéralement et une zone de découplage avec des éléments de découplage optiques placés sur sa surface.

9. Ensemble de luminaires selon l'une des revendications 1 à 8, **caractérisé en ce qu'**un élément supplémentaire de direction de lumière comme une grille lumineuse (55) délimitée latéralement par la section centrale (Z), une grille à lamelles ou un dispositif à réflecteur (40, 41) est placé dans le sens du rayonnement de la lumière derrière l'élément optique (110, 111, 112).

10. Ensemble de luminaires selon l'une des revendications 1 à 9, **caractérisé en ce qu'**un élément supplémentaire de direction de lumière comme un diffuseur délimité transversalement par la section latérale ou une plaque de prismes (50) est placé dans le sens de l'éclairage derrière l'élément optique.

11. Ensemble de luminaires selon l'une des revendications 9 ou 10, **caractérisé en ce que** l'élément supplémentaire de direction de lumière est fabriqué d'un seul tenant avec l'élément optique (110, 111, 112).

12. Ensemble de luminaires selon l'une des revendications 1 à 11, **caractérisé en ce que** la section latérale (L1) comprend, dans sa zone de guidage de lumière (L1a), un matériau transparent et un matériau translucide dans une zone de découplage (L1b).

13. Ensemble de luminaires selon l'une des revendications 1 à 12, **caractérisé en ce qu'**un élément supplémentaire de direction de lumière comme une grille lumineuse ou une grille à lamelles (55) délimitée par la section centrale (Z) et la zone de guidage de lumière (L1a) de la section latérale (L1) est placé dans le sens de l'éclairage derrière l'élément optique.

14. Ensemble de luminaires selon l'une des revendications 1 à 13, **caractérisé en ce que** les éléments de découplage (60, 61) sont placés sur la surface de la zone de découplage (L1b) de la section latérale (L1) sur le côté frontal et/ou le côté arrière.
